# NEW EUROPEAN PATENT SPECIFICATION

(11) **EP 3 408 334 B2**
(45) Date of publication and mention of the opposition decision: **09.12.2026**
(45) Mention of the grant of the patent: 13.05.2020
(21) Application number: 16810434.7
(22) Date of filing: 19.12.2016
(51) Int. Cl.: C09D 5/00, C08K 3/00

(54) **METHOD TO PROTECT HEAT TREATED STEEL PRODUCTS AGAINST OXIDATION AND DECARBURISATION**
VERFAHREN ZUM SCHUTZ WÄRMEBEHANDELTER STAHLPRODUKTE GEGEN OXIDIERUNG UND ENTKOHLUNG
PROCÉDÉ POUR PROTÉGER DES PRODUITS EN ACIER TRAITÉS À CHAUD CONTRE L'OXYDATION ET LA DÉCARBURATION

(30) Priority: 29.01.2016 WO PCT/EP2016/153440
(43) Date of publication of application: 05.12.2018
(73) Proprietor: Tata Steel UK Limited, London SW1P 4WY (GB)
(72) Inventor: THAKUR, Digvijay, 1970 CA IJmuiden (NL); PATOLE, Samson, 1970 CA IJmuiden (NL); BÖHM, Sivasambu, 1970 CA IJmuiden (NL); GORDON, Douglas Jresus Figueroa, 1970 CA IJmuiden (NL); LEWANDOWSKA, Anna, 1970 CA IJmuiden (NL); TAYLOR, Thomas James, 1970 CA IJmuiden (NL)
(74) Representative: Wynne-Jones IP Limited
(86) International application number: PCT/EP2016/081791
(87) International publication number: WO 2017/129326

(56) References cited:
- EP-A1- 2 939 979
- EP-A2- 2 639 329
- WO-A1-2015/160764
- US-A1- 2010 098 956
- YAYA LI ET AL: "Self-aligned graphene as anticorrosive barrier in waterborne polyurethane composite coatings", JOURNAL OF MATERIALS CHEMISTRY A: MATERIALS FOR ENERGY AND SUSTAINABILITY, vol. 2, no. 34, 4 July 2014 (2014-07-04), GB, pages 14139, XP055273344, ISSN: 2050-7488, DOI: 10.1039/C4TA02262A
- KARANVEER. S. ANEJA ET AL: "Graphene based anticorrosive coatings for Cr(VI) replacement", NANOSCALE, vol. 7, no. 42, 28 September 2015 (2015-09-28), United Kingdom, pages 17879 - 17888, XP055273332, ISSN: 2040-3364, DOI: 10.1039/C5NR04702A
- DUMÉE LUDOVIC F ET AL: "Growth of nano-textured graphene coatings across highly porous stainless steel supports towards corrosion resistant coatings", CARBON, vol. 87, 24 February 2015 (2015-02-24), pages 395 - 408, XP029204878, ISSN: 0008-6223, DOI: 10.1016/J.CARBON.2015.02.042
- MD J. NINE ET AL: "Graphene: a multipurpose material for protective coatings", JOURNAL OF MATERIALS CHEMISTRY A: MATERIALS FOR ENERGY AND SUSTAINABILITY, vol. 3, no. 24, 2 April 2015 (2015-04-02), GB, pages 12580 - 12602, XP055273349, ISSN: 2050-7488, DOI: 10.1039/C5TA01010A

## Description

### Field of the invention

The invention relates to a method to protect heat treated steel products against oxidation and decarburisation and a graphene based coating that is used in the method.

### Background of the invention

When steel products are subjected to heat treatments in presence of oxidising atmosphere conditions oxidation and decarburisation of steel substrate may occur. Such heat treatments are for example forging, heat treatments in furnaces for heat treatable steel such as high carbon steels and hot forming of boron containing steels to produce structural steel components for automotive applications.

The use of ultrahigh-strength steels, like boron alloys, in structural and safety components in the automotive industry is rapidly increasing, owing to the steadily rising vehicle safety and crash requirements. Ultrahigh-strength steels, however, pose a major challenge in processing because of their limited formability at room temperature. To address these challenges, hot-press forming or hot-stamping technique is utilized, which involved press forming of high tensile steel sheet after it is heated to relative high temperatures.

In hot forming, firstly the part is austenitized at a higher temperature of approximately 900°C, and then transferred to a hot forming die where the steel product is pressed into its final shape and cooled at the same time. In this manner, complex shapes can be achieved as the material has excellent formability at high temperatures. However, the high temperature processing involved in hot forming technique produces side effects such as oxidation and decarburisation of steel surface, resulting in loss of surface quality and reduction in strength.

The oxide formed during hot forming result in scale formation on the hot formed product or the oxide can peel or flake-off and adhere to the hot forming dies resulting in decreased productivity. This scale formed on the hot formed steel product is detrimental to its appearance as well as to the adherence of a protective coating applied to the product. The scale formation is resolved by having an extra shot blasting stage in the hot stamping production line, adding extra cost and lowering production yields.

Another prominent challenge faced during hot forming process is the decarburisation of steel sheet surface. Decarburisation or depletion of surface carbon content takes place when steel is heated to temperatures above 650°C. It progresses as a function of time, temperature and atmospheric conditions. Decarburisation of the steel product surface is detrimental for its mechanical properties as depletion of carbon from the surface can decrease its hardness and strength, which can consequently affect the structural integrity of a hot formed product.

Heat treatable steel, such as high carbon steels, could also shown decarburisation effects following intermediate heat treatments, such as spheroidisation, under reducing or oxidising atmospheres. These heat treatments could typically go up to 700-800°C and improve microstructure homogeneity and improve cold rolling of high carbon steel.

### Objectives of the invention

It is an objective of the present invention to provide a method to prevent or limit oxidation of a steel product during heat treatment of the steel product.

It is another objective of the present invention to provide a method to prevent or limit decarburisation of a steel product during heat treatment of the steel product.

It is another objective of the present invention to provide a method wherein the steel product has an improved appearance after the heat treatment in comparison with prior art results.

It is another objective of the present invention to provide a method wherein the surface of the steel product after the heat treatment has better properties for the adherence of paint in comparison with prior art results.

It is another objective of the present invention to provide a method wherein the steel product has improved mechanical properties such as hardness and/or strength after the heat treatment in comparison with prior art results.

It is still another objective of the present invention to provide a method the use of which will decrease the total costs of the further process steps following the heat treatment.

### Description of the invention

The present invention is defined in method claims 1-13 as attached.

According to a first aspect one or more of the objectives are realized by providing a method to prevent or limit oxidation and/or decarburisation of a steel product when subjected to a heat treatment, wherein before subjecting the steel product to the heat treatment a graphene based coating is applied on the steel product.

It was found that with a graphene based coating applied to the steel product the oxidation and/or decarburisation, which normally occurs when subjecting a steel product to a heat treatment, could be limited or even prevented.

It was further found that the amount of graphene in the graphene based coating is of importance. With a relatively thinner layer of graphene based coating with the mean thickness of the coating ~90 mm after curing oxidation and decarburisation are already considerably less than without a graphene based coating.

The results are further improved by applying a thick layer of the graphene based coating or more easily by applying successive layers of the graphene based coating on the steel product.

Preferably the graphene based coating layer is applied with a thickness in the range of 50 -200 mm, more preferably in the range of 80 - 200 mm and even more preferably in the range of 90 - 160 mm. The thickness given is the thickness after curing.

It was further found that the results further improved by applying a top coat layer on the graphene based coating. It is believed that with such a top coat layer the graphene based coating can be kept intact for a longer period of time giving better results.

According to a further aspect it is provided that the applied layer or layers of graphene based coating are cured preceding the heat treatment of the steel product. Preferably it is provided that the applied layer or layers of graphene based coatings and the applied top coat layer are cured simultaneously.

According to the present invention the heat treatment comprises that the steel product reaches a temperature in the range of 600 - 1000°C. From 600°C the decarburisation of the steel product may already start and is further depending on the time that the product is subjected to such a heat treatment.

The method is particularly relevant for heat treatments at higher temperatures such as a heat treatment which comprises that the steel product is subjected to a hot forming step. With hot forming the steel product will typically be subjected to a temperature in the order of 900°C with the upper limit being 1000°C.

According to a further aspect the method is specially suitable for the heat treatment of a steel product wherein the steel product is a high carbon steel or a boron steel.

According to a further aspect not according to the invention as claimed, the composition for the graphene based coating comprises a polyurethane primer containing graphene and a corrosion inhibitor. The polyurethane primer forms the bulk material of the graphene based coating. Graphene provides anti-oxidation properties to the graphene based coating and is a thermally stable barrier. The corrosion inhibitor is added to further improve the anti-corrosion properties of the coating.

The corrosion inhibitor comprises one or more cations selected from zinc, magnesium, titanium, zirconium, yttrium, lanthanum and cerium. Good results have been achieved by using cerium acetate as the corrosion inhibitor.

According to a further aspect not according to the invention as claimed, the composition for the graphene based coating further contains a coupling agent which facilitates the chemical bonding of the graphene based coating to the steel product. The coupling agent can further be selected to have more general adhesions properties as well as cross-linking properties. The cross-linking properties of the coupling agent will result in the cross-linking of multilayer stacks of graphene material aligned parallel along the surface of steel product which will further limit the permeation and/or contact of air/oxygen with the surface of the steel product and therewith further prevent oxide formation.

According to a further aspect the coupling agent comprises an organofunctional silane. Better crosslinking of graphene sheets to polyurethane matrix was achieved with an epoxysilane or a methoxysilane as the organofunctional silane which resulted into a better thermally stable barrier against oxidation.

According to a further aspect not according to the invention as claimed, the composition for the graphene based coating further contains a siloxane, preferably a dimethylpolysiloxane. The siloxane is added for its properties as a wetting agent.

According to a further aspect not according to the invention as claimed, the composition for the graphene based coating further contains an additive to maintain the adhesion and to stabilize viscosity of the graphene based coating.

In an aspect not according to the invention as claimed isa graphene based coating composition for use in the method comprising 0.5 - 10 wt% graphene, 0.01 - 0.5 wt% of a corrosion inhibitor and 2 - 40 wt% of an organofunctional silane and optionally 0.1 - 1.0 wt% of a siloxane containing additive and/or 0.1 - 1.0 wt% of an additive to maintain the adhesion and to stabilize viscosity of the graphene based coating, the balance being polyurethane primer. For the polyurethane primer rather a thermosetting polyurethane is used than a thermoplastic polyurethane. The thermosetting polyurethane is preferably a thermosetting polyurethane with aliphatic constituents.

According to a further aspect not according to the invention as claimed, the graphene based coating composition has a graphene content in the range of 3.0 - 7.0 wt% and an organofunctional silane content in the range of 10 - 30 wt%.

### Example

### 1. Synthesis of graphene from graphite raw material

The graphene was produced according to the following protocol: 34g graphite (TIMCAL TIMREX^{®} LSG 6), 150g N-Methyl-2-pyrrolidone (NMP) and 0.5g of DISPERBYK^{®} 180 (a wetting and dispersing additive) were mixed and subjected to 6 hours of both high shear mixing at 8000 RPM on a SILVERSON^{®} high shear mixer and an ultrasonic treatment whilst maintaining the temperature below 21 °C with the use of an immersion cooler. This mixture was collected and centrifuged at 600 RPM for 150 minutes. The supernatant was collected and used further in step 2 to produce corresponding formulations.

### 2. Preparation of graphene based coating formulations

In the present invention three formulations were prepared to produce graphene based coatings on steel sheet. Table 1 enlists the three formulations and corresponding components of formulations and their quantities.

**Table 1: Coating formulation recipes**

| Formulation | Graphene [g] | NMP [g] | Cerium Acetate [g] | Sivo 110 [g] | Glymo [g] | BYK 341 [g] | BYKES 80 [g] | Polyurethane primer [g] |
|---|---|---|---|---|---|---|---|---|
| 1. | 5 | 1.0994 | 0.0109 | 20 | - | - | - | 74 |
| 2. | 5 | 1.1274 | 0.0146 | 20 | - | 0.5422 | 0.5012 | 73 |
| 3. | 5 | 1.0418 | 0.011 | - | 20 | - | - | 74 |

### Formulation preparation protocol:

Cerium Acetate was dissolved in NMP solvent in ultrasonic bath for 15 min. Simultaneously, graphene (synthesised in step 1) in NMP was ultrasonicated for 10 minutes in order to obtain better dispersion of graphene in NMP. Afterwards, both dispersions were added to polyurethane resin and mixed with other components of the formulation (i.e. Dynasalan^{®} SIVO 110, Dynasalan^{®} GLYMO, BYK^{®} 341, BYK^{®} ES 80) using DISPERMAT^{®} stirrer (time=20 mins., speed=200 rotation per minute) to prepare three different formulations with corresponding recipe. All three formulations were ultrasonicated for five minutes before applying as coating on steel sheet using draw bar coater.

SIVO 110 resembles a multifunctional, basically VOC-free, water borne sol-gel system. It is composed of a silica sol, modified with organofunctional silanes. Besides silanol groups it also contains organic functionalities based on Si bonded epoxy groups. It is predominantly suited as a binder for temperature curing sol-gel coatings and for sol-gel based hybrid coatings.

GLYMO is a bifunctional organosilane possessing a reactive organic epoxide and hydrolyzable inorganic methoxysilyl groups. The dual nature of its reactivity allows the product to bind chemically to both inorganic materials (e.g. glass, metals, fillers) and organic polymers (e.g. thermosets, thermoplastics, elastomers), thus functioning as an adhesion promoter, crosslinking agent and/or surface modifier.

Byk-341 is a solution of a polyether modified dimethylpolysiloxane. The solution acts as a silicone based anti-crater additive in solvent-borne and aqueous coatings and promotes substrate wetting.

BYK-ES 80 is a solution of an alkylolammonium salt of an unsaturated acidic carboxylic acid ester. This product increases the conductivity of coatings and maintains the film properties (such as adhesion), does not cause yellowing and stabilizes viscosity.

### 3. Deposition of graphene based formulation on steel sheet

Steel sheets (Grade 4950 / 4951 substrate typical composition: 0.22 % C, 0.15 % Si, 1.20 % Mn, 0.25 % Cr, 0.02 % Ti, 0.003 % B, Dimensions (Ixwxd) = 300 mm x 200 mm x 1.5 mm) were coated using draw bar coater to obtain graphene based coatings using the formulations prepared in step 2. Total four samples were produced. First three sample comprised two layers deposited using respective formulation. A curing step was carried out after depositing first layer followed by deposition of second layer on top of cured first layer. An additional fourth sample was prepared with an extra coating layer of polyurethane top coat on top of two initially deposited layers (in total three layers). All coated samples were heated in a laboratory oven for a curing duration of 1 min 36 s at a Peak Metal Temperature of T=232 °C. The total thickness of coating varied between 90 to 150 µm (mean values).

### 4. Sample preparation and hot forming of coated steel sheet

### 4.1 Sample preparation

Samples with graphene based coatings on a steel sheet (with initial dimensions 300mm×200 mm) were cut to three 100 mm×140 mm samples for hot stamping and three 300x20 mm samples for pre-hot stamping evaluation. The samples were cut dry in order to prevent contamination of coating surface by lubricants.

### 4.2 Hot stamping

An electric-fired furnace with un-protected atmosphere (no inert gas control) was used to heat individual samples to 900°C. Thereafter, manual transfer of heated sample was carried out from the furnace to a stamping tool (in ~ 8 seconds) to obtain a typical top-hat part / tool geometry using 30T press with a coated surface facing die (rather than the punch). Simple die-quenching was utilised without any integrated cooling system. Cooling rate was typically >100°C/s above 500°C and >60°C/s between 200 and 500°C.
Summary of typical parameter values for hot stamping step,
- Mean heating rate: ~ 7.5°C/s to soak temperature
- Soak: 5 min-900°C
- Transfer: ~ 8 s
- Hot stamping: ~ 2 s
- Die-quenching (full 30 T load): 10 s

The results of subjecting the samples to the hot stamping process are described on hand of the drawings.

### Brief description of the drawings

The invention will be further explained on hand of the drawing, in which:
- Fig.1a,b: show a side-view, respectively a top-view of an uncoated hot formed steel product;
- Fig.2a-c: show light optical microscopy images of a section of the uncoated steel product according to fig.1 before and after hot forming and a scanning electron microscopy image of section of the steel product after hot forming;
- Fig.3a,b: show a side-view, respectively a top-view of a hot formed steel product which was provided with a graphene based coating prior to hot forming;
- Fig.4 a,b: show light optical microscopy images of a section of the steel product according to fig.3 before and after hot forming;
- Fig.5a,b: show a side-view, respectively a top-view of a hot formed steel product which was provided with a graphene based coating prior to hot forming;
- Fig.6a,b: show light optical microscopy images of a section of the steel product according to fig.5 before and after hot forming;
- Fig.7a,b: show a side-view, respectively a top-view of a hot formed steel product which was provided with a graphene based coating prior to hot forming, and
- Fig.8a-c: show light optical microscopy images of a section of the steel product according to fig.7 before and after hot forming and a scanning electron microscopy image of the steel product after hot forming.

### Detailed description of the drawings

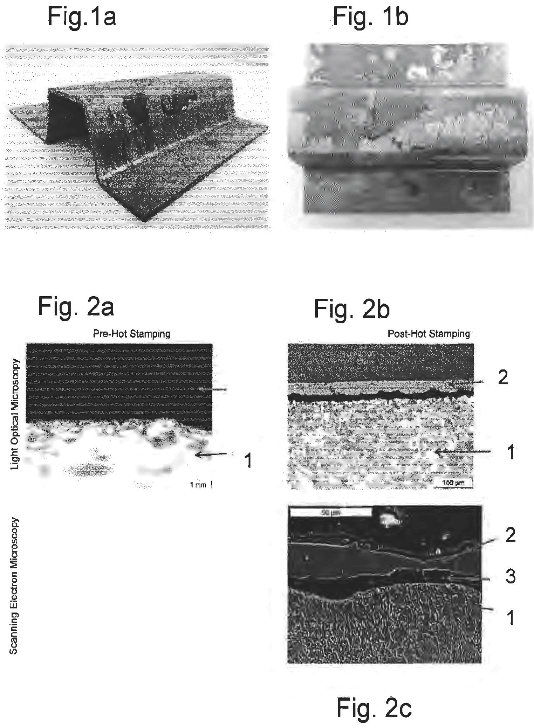

In fig.1a,b a hot formed steel product is shown which was not provided with a graphene based coating prior the hot forming step. The analytical results shown in fig.2a-c based on light optical microscopy images (fig.2a, fig.2b) and further cross-sectional analysis of the sample using a scanning electron microscope (SEM) (fig.2c) reveal the formation of a thick oxide layer 2 as a result of the hot forming process. The images show a gap 3 between the martensite substrate 1 and the oxide layer 2. Fig.2a is an image before hot-forming and fig.2b,2c are images after hot-forming.

In fig.2c it further reveals an increasing ferrite formation toward the surface of the steel product 1 which indicates the loss of carbon. The loss of carbon results in a decrease of the mechanical properties of the hot formed steel product, including the loss of hardenability.

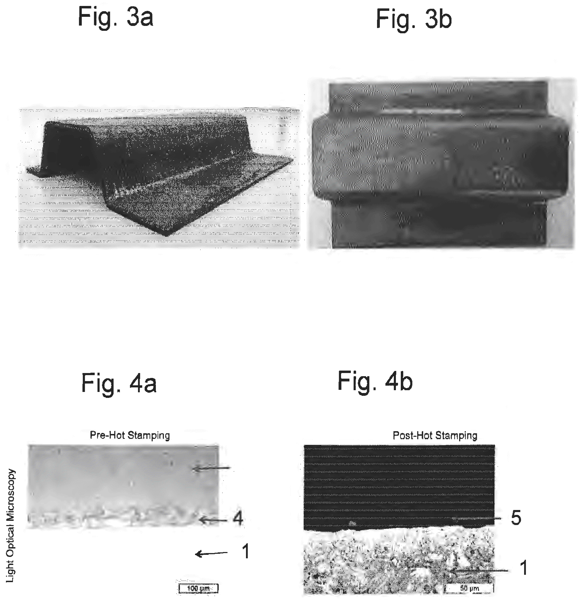

In fig.3a,b a hot formed steel product 1 is shown which was provided with a graphene based coating 4 prior the hot forming step. The graphene based coating 4 was provided on the steel product 1 by means of a draw bar coater, but any other suitable application means can also be used. The coating comprises a liquid phase exfoliated few layer graphene dispersed in polyurethane primer matrix according to Formulation 2 in Table 1 and was applied with a thickness of about 150µm. The use of this graphene based coating resulted in less oxide 5 formation on the steel product in comparison with the uncoated sample of fig.1a,b. This can be seen from the appearance of the steel product in fig.3a,b and more clearly in the images shown in fig.4a,b, both light optical microscopy images wherein fig.4a is an image before hot-forming and fig.4b after hot-forming. At the same time no substantial ferrite formation was observed and majority of the steel is in martensite phase.

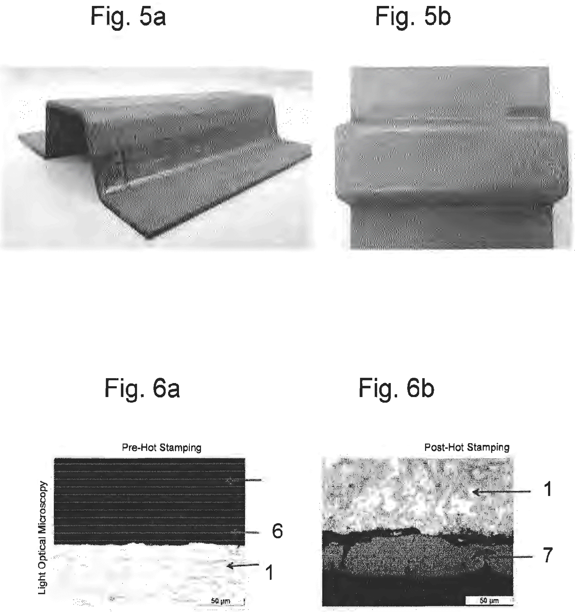

In fig.5a,b a hot formed steel product 1 is shown which was provided with a graphene based coating 6 according to Formulation 3 prior the hot forming step. However, the thickness of the applied graphene based coating 6 was about 90µm, 40 % less than the coating thickness in the example given in fig.3a,b and fig.4a,b.

The graphene based coating 6 with liquid phase exfoliated few layer graphene dispersed in polyurethane primer matrix exhibited typical results in terms of oxide formation. It turns out that the total layer thickness of the deposited coating plays a crucial role in providing the optimal protection against the oxidation. The thickness directly determined the amount of graphene material available for providing the barrier protection and also the stoichiometric amount of carbon required for sustaining the carbothermal reduction of oxide generated during hot forming.

The results of a graphene based coating with reduced thickness can be seen in the light optical microscopy images of fig.6a,b, respectively before and after hot-forming, which shows that a thick oxide layer 7 is formed on the surface of the martensite substrate 1.

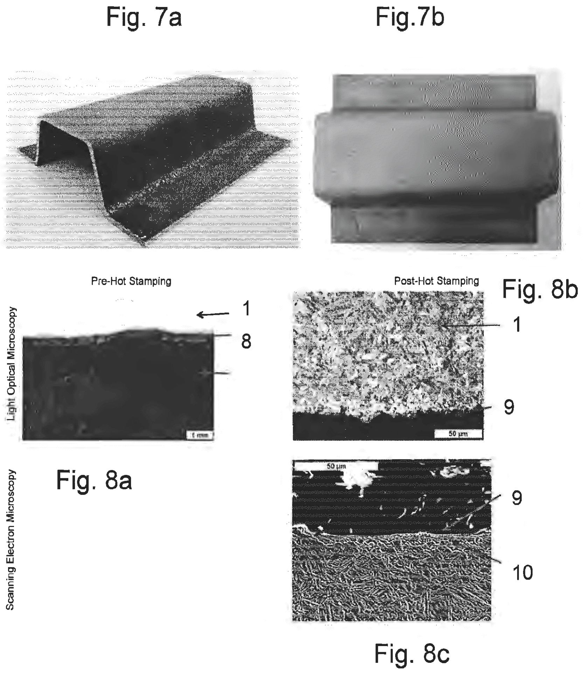

In fig.7a,b a hot formed steel product 1 is shown which was provided with a coating 8 with two graphene based coating layers and a top coat layer with a total thickness of about 132µm prior the hot forming step.

Fig.8a,8b show light optical microscopy images and fig.8c a scanning electron microscopy image. From the cross sectional light optical microscopy and the SEM analysis, see fig.8b,8c, it is clear that this combination of coating layers 8 has effectively prevented oxide formation and at the same time avoided any carbon depletion near the surface of the steel sheet 1, resulting in a homogeneous martensite up to and including the sample edge indicated with arrow 10. The coating 8 has been spent as good as completely during hot forming step, indicated with arrow 9. This effectively provides an ideal solution to the typical challenges faced during hot forming process. Since there is no coating remaining on the steel sheet as well as the absence of oxide layer eliminate the need for shot blasting step after hot forming. In case there is some part of coating 8 still remains after the hot forming, due to conductive nature of few layer graphene flakes and partial functionalisation, it can provide benefits such as better weldability and coatability in downstream processing steps.

## Claims

1. Method to prevent or limit oxidation and/or decarburisation of a steel product when subjected to a heat treatment, **characterised in that** before subjecting the steel product to the heat treatment a graphene based coating is applied on the steel product and wherein the heat treatment comprises that the steel product is subjected to a hot forming step, wherein the heat treatment comprises that the steel product reaches a temperature in the range of 600 - 1000°C , wherein a top coat layer is applied on the graphene based coating .

2. Method according to claim 1, wherein the graphene based coating is applied in successive layers on the steel product.

3. Method according to any one of the preceding claims 1 - 2, wherein the applied layer or layers of graphene based coating are cured preceding the heat treatment of the steel product.

4. Method according to claim 43, wherein the applied layer or layers of graphene based coatings and the applied top coat layer are cured simultaneously.

5. Method according to any one of the preceding claims 1 - 4, wherein the steel product is a high carbon steel or a boron steel.

6. Method according to any one of the preceding claims 1 - 5, wherein the composition for the graphene based coating comprises a polyurethane primer containing graphene and a corrosion inhibitor.

7. Method according to claim 6, wherein the composition for the graphene based coating further contains a coupling agent.

8. Method according to claim 6 or 7, wherein the corrosion inhibitor comprises one or more cations selected from zinc, magnesium, titanium, zirconium, yttrium, lanthanum and cerium.

9. Method according to claim 8, wherein the corrosion inhibitor is cerium acetate.

10. Method according to any of the preceding claims 7 - 9, wherein the coupling agent comprises an organofunctional silane.

11. Method according to claim 10, wherein the organofunctional silane is an epoxysilane or a methoxysilane.

12. Method according to any of the preceding claims 7 - 11, wherein the composition for the graphene based coating further contains a siloxane, preferably a dimethylpolysiloxane.

13. Method according to any of the preceding claims 6 - 12, wherein the composition for the graphene based coating further contains an additive to maintain the adhesion and to stabilize viscosity of the graphene based coating.

## Patentansprüche

1. Verfahren zum Verhindern oder Begrenzen der Oxidierung und/oder Entkohlung eines Stahlprodukts bei Aussetzung an eine Wärmebehandlung, **dadurch gekennzeichnet, dass**, vor dem Aussetzen des Stahlprodukts an die Wärmebehandlung, eine Graphen-basierte Beschichtung auf das Stahlprodukt aufgetragen wird und wobei die Wärmebehandlung umfasst, dass das Stahlprodukt einem Warmformgebungsschritt unterzogen wird, wobei die Wärmebehandlung umfasst, dass das Stahlprodukt eine Temperatur im Bereich von 600-1000 ° C erreicht, wobei eine Deckschicht auf die Graphen-basierte Beschichtung aufgetragen wird.

2. Verfahren nach Anspruch 1, wobei die Graphen-basierte Beschichtung in aufeinanderfolgenden Schichten auf das Stahlprodukt aufgetragen wird.

3. Verfahren nach einem der vorhergehenden Ansprüche 1-2, wobei die aufgetragene(n) Schicht oder Schichten an Graphen-basierter Beschichtung der Wärmebehandlung des Stahlprodukts vorausgehend ausgehärtet werden.

4. Verfahren nach Anspruch 3, wobei die aufgetragene(n) Schicht oder Schichten an Graphenbasierten Beschichtungen und die aufgetragene Deckschicht gleichzeitig ausgehärtet werden.

5. Verfahren nach einem der vorhergehenden Ansprüche 1-4, wobei das Stahlprodukt ein kohlenstoffreicher Stahl oder ein Borstahl ist.

6. Verfahren nach einem der vorhergehenden Ansprüche 1-5, wobei die Zusammensetzung für die Graphen-basierte Beschichtung eine Polyurethangrundierung, die Graphen und einen Korrosionshemmer enthält, umfasst.

7. Verfahren nach Anspruch 6, wobei die Zusammensetzung für die Graphen-basierte Beschichtung ferner ein Kopplungsmittel enthält.

8. Verfahren nach Anspruch 6 oder 7, wobei der Korrosionshemmer ein oder mehrere aus Zink, Magnesium, Titan, Zirkonium, Yttrium, Lanthan und Cer ausgewählte Kationen umfasst.

9. Verfahren nach Anspruch 8, wobei der Korrosionshemmer Ceracetat ist.

10. Verfahren nach einem der vorhergehenden Ansprüche 7-9, wobei das Kopplungsmittel ein organofunktionelles Silan umfasst.

11. Verfahren nach Anspruch 10, wobei das organofunktionelle Silan ein Epoxysilan oder ein Methoxysilan ist.

12. Verfahren nach einem der vorhergehenden Ansprüche 7-11, wobei die Zusammensetzung für die Graphen-basierte Beschichtung ferner ein Siloxan, bevorzugt ein Dimethylpolysiloxan, enthält.

13. Verfahren nach einem der vorhergehenden Ansprüche 6-12, wobei die Zusammensetzung für die Graphen-basierte Beschichtung ferner ein Additiv zum Aufrechterhalten der Adhäsion und zum Stabilisieren der Viskosität der Graphen-basierten Beschichtung enthält.

## Revendications

1. Procédé pour prévenir ou limiter l'oxydation et/ou la décarburation d'un produit en acier quand il est soumis à un traitement thermique, **caractérisé en ce que**, avant de soumettre le produit en acier au traitement thermique, un revêtement à base de graphène est appliqué sur le produit en acier et dans lequel le traitement thermique comprend le fait que le produit en acier est soumis à une étape de formage à chaud, dans lequel le traitement thermique comprend le fait que le produit en acier atteint une température comprise dans la plage de 600 à 1000 ° C, dans lequel une couche de revêtement supérieure est appliquée sur le revêtement à base de graphène.

2. Procédé selon la revendication 1, dans lequel le revêtement à base de graphène est appliqué en couches successives sur le produit en acier.

3. Procédé selon l'une quelconque des revendications précédentes 1 à 2, dans lequel la ou les couches appliquées de revêtement à base de graphène sont durcies avant le traitement thermique du produit en acier.

4. Procédé selon la revendication 3, dans lequel la ou les couches appliquées de revêtements à base de graphène et la couche de revêtement supérieure appliquée sont durcies simultanément.

5. Procédé selon l'une quelconque des revendications précédentes 1 à 4, dans lequel le produit en acier est un acier à haute teneur en carbone ou un acier au bore.

6. Procédé selon l'une quelconque des revendications précédentes 1 à 5, dans lequel la composition pour le revêtement à base de graphène comprend un apprêt de polyuréthane contenant du graphène et un inhibiteur de corrosion.

7. Procédé selon la revendication 6, dans lequel la composition pour le revêtement à base de graphène contient en outre un agent de couplage.

8. Procédé selon la revendication 6 ou 7, dans lequel l'inhibiteur de corrosion comprend un ou plusieurs cations choisis parmi le zinc, le magnésium, le titane, le zirconium, l'yttrium, le lanthane et le cérium.

9. Procédé selon la revendication 8, dans lequel l'inhibiteur de corrosion est l'acétate de cérium.

10. Procédé selon l'une quelconque des revendications précédentes 7 à 9, dans lequel l'agent de couplage comprend un silane organofonctionnel.

11. Procédé selon la revendication 10, dans lequel le silane organofonctionnel est un époxysilane ou un méthoxysilane.

12. Procédé selon l'une quelconque des revendications précédentes 7 à 11, dans lequel la composition pour le revêtement à base de graphène contient en outre un siloxane, préférablement un diméthylpolysiloxane.

13. Procédé selon l'une quelconque des revendications précédentes 6 à 12, dans lequel la composition pour le revêtement à base de graphène contient en outre un additif pour maintenir l'adhésion et pour stabiliser la viscosité du revêtement à base de graphène.
